# EUROPEAN PATENT APPLICATION

(11) **EP 3 848 556 A1**
(43) Date of publication of application: **14.07.2021**
(21) Application number: 20425002.1
(22) Date of filing: 13.01.2020
(51) Int. Cl.: F01D 9/02, F01D 25/12, F23R 3/00

(54) **GAS TURBINE ENGINE HAVING A TRANSITION PIECE WITH INCLINED COOLING HOLES**

(71) Applicant: Ansaldo Energia Switzerland AG, 5400 Baden (CH); ANSALDO ENERGIA S.p.A., 16152 Genova (IT)
(72) Inventor: Duesing, Michael Klaus, 79618 Rheinfelden (DE); Chiarioni, Aldo, 16132 Genova (IT); Steiner, Harald, 5400 Baden (CH); Anisimov, Vyacheslav, 16152 Genova (IT)
(74) Representative: Bernotti, Andrea

(57) **Abstract**

The gas turbine (1) comprises a compressor (2), one or more combustors (3) and a turbine (4). A transition piece (5) is provided between the one or more combustors (3) and the turbine (4) for guiding a hot gas (45) generated in the one or more combustors (3) to the turbine (4). The transition piece (5) has an inner shell (8) and an outer shell (9) defining an annular chamber (13). The inner shell (8) has a wall (18) with cooling holes (20, 23, 28). The first cooling holes (20) closer to the turbine (4) have a larger angle (21) than second cooling holes (23) farther from the turbine (4), each angle (21) being defined by a longitudinal axis (25) of the cooling hole directed towards the annular chamber (13) and an axis (27) perpendicular to the wall (18).

## Description

### TECHNICAL FIELD

The present invention relates to a gas turbine. In particular the present invention refers to the connection of hot gas turbine parts to colder gas turbine parts, such as for example the connection of a transition piece to a turbine.

### BACKGROUND

Gas turbines comprise a compressor for compressing air, one or more combustors that receive the compressed air and in addition fuel and combust the fuel generating hot gas, a turbine where the hot gas is expanded to gather mechanical work. Between the combustor and the turbine a transition piece is provided that guides the hot gas from the combustor to the turbine. The transition piece is usually cooled because of the high temperature of the hot gas flowing through it; for example the transition piece has a wall with one surface facing the hot gas and the opposite surface, facing away from the hot gas, that is cooled by a cooling air flow flowing over it in a direction towards the turbine.

Because of the cooling scheme and the structure of the connection between the transition piece and the turbine, the downstream part of the transition piece wall facing the turbine can have a temperature lower or much lower than the upstream part of the transition piece wall facing away from the turbine. This can be due for example to the separation of the hot gas flow from the wall surface and/or the presence of large metal parts at the end of the transition piece wall that distribute the heat over a large metal mass.

The differential temperature causes stress in the wall and mechanical fatigue that may negatively affect and shorten the lifetime of the components and must thus be counteracted.

### SUMMARY

An aspect of the invention includes providing a gas turbine with a transition piece whose wall facing the turbine has a softer thermal gradient than in traditional gas turbines. This advantageously allows an increase of the lifetime of the components.

These and further aspects are attained by providing a gas turbine in accordance with the accompanying claims.

### BRIEF DESCRIPTION OF THE DRAWINGS

Further characteristics and advantages will be more apparent from the description of a preferred but non-exclusive embodiment of the gas turbine, illustrated by way of non-limiting example in the accompanying drawings, in which:
Figure 1 schematically shows a gas turbine;
Figure 2 schematically shows a transition piece of the gas turbine of figure 1;
Figure 3 schematically shows the connection between the transition piece and the turbine;
Figure 4 schematically shows a cooling hole;
Figure 5 shows the course of the temperature in a wall of a traditional transition piece and in transition pieces of the invention;
Figure 6 and 7 show an inner shell of the transition piece and the cooling hole distribution on it.

### DETAILED DESCRIPTION OF EXEMPLARY EMBODIMENTS

With reference to the figures, these show a gas turbine 1; the gas turbine 1 comprises a compressor 2, one or more combustors 3 (two in the example of the figures) and a turbine 4. A transition piece 5 is provided between the combustors 3 and the turbine 4, for guiding a hot gas flow generated in the combustors 3 to the turbine 4.

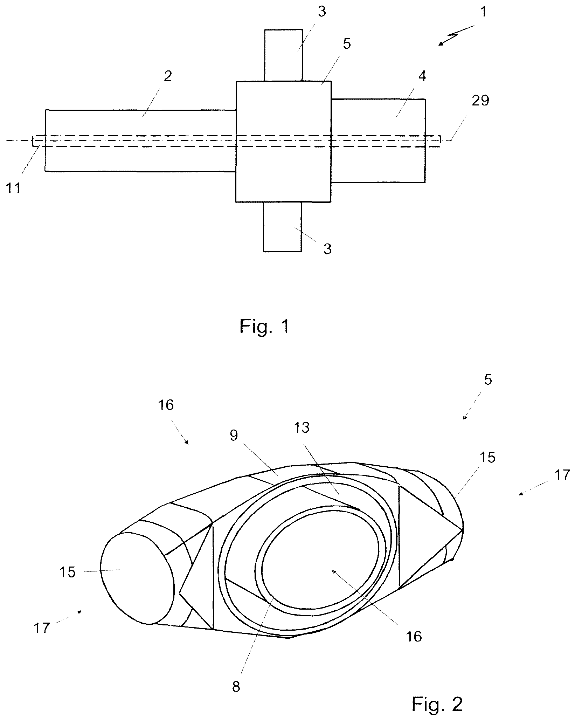

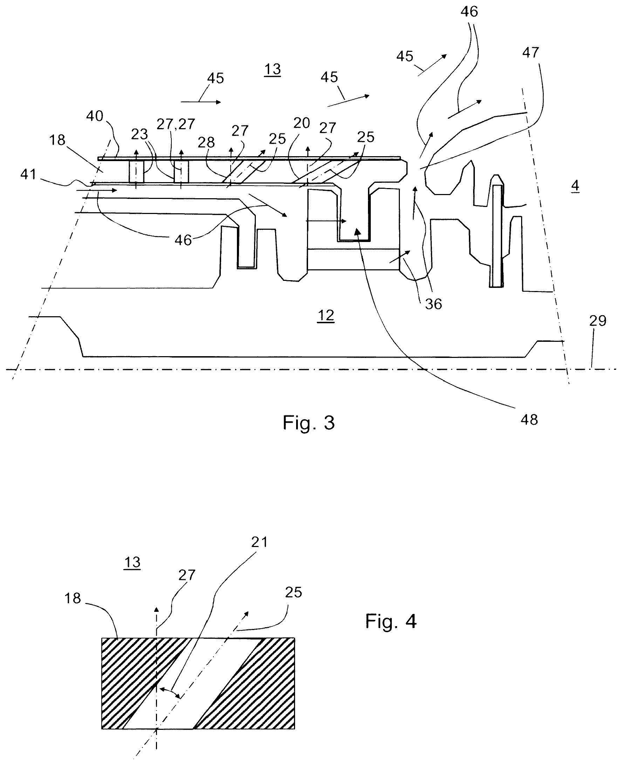

The transition piece 5 (figure 2) has an inner shell 8 and an outer shell 9. The inner shell 8 embraces a rotor 11; the rotor 11 is shown in figure 1 but for clarity is not shown in figure 2; figure 3 shows a rotor cover 12. The outer shell 9 embraces the inner shell 8, such that the inner shell 8 and the outer shell 9 together define an annular chamber 13 (the hot gas passes through this annular chamber 13). In addition, the transition piece has ports 15 (two in the example) that are provided at opposite sides of the outer shell 9 for the connection of the combustors 3. The compressor 2 and the turbine 4 are connected to the inner shell 8 and to the outer shell 9 at opposite front sides 16 of the transition piece 5 and the combustors 3 are connected to the outer shell 9 at lateral sides 17 of the transition piece 5.

The inner shell 8 has a wall 18 with cooling holes; advantageously first cooling holes 20 closer to the turbine 4 have a larger angle 21 than second cooling holes 23 farther from the turbine 3. The angle 21 is defined for each hole by a longitudinal axis 25 of the cooling holes directed towards the annular chamber 13 (where the hot gas flows) and an axis 27 perpendicular to the wall 18 and directed towards the annular chamber 13.

The turbine 4 preferably has a longitudinal axis 29 with the transition piece 5 that extends over the longitudinal axis 29; the first cooling holes 20 are closer to the turbine 4 than the second cooling holes 23 with respect to this longitudinal axis 29.

In a preferred embodiment, the first cooling holes 20 have one first angle and the second cooling holes 23 have one second angle. In addition, at least third cooling holes 28 between the first and the second cooling holes 20, 23 could be foreseen; in this case the third cooling holes 28 have one third angle with a size between the first and the second angle, i.e. the third angle is smaller than the first angle but larger than the second angle. Naturally fourth and even more cooling holes each with one angle could be foreseen.

In the present embodiment, the first angle is 60 degrees and the second angle is 0 degrees. In addition, if the third cooling holes are provided, the third angle is 45 degree.

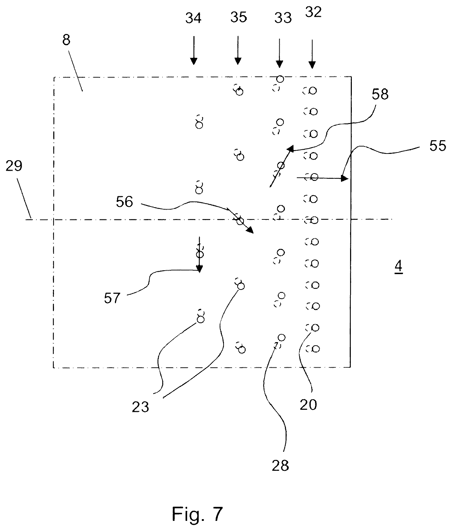

The first and/or second and/or third cooling holes 20, 23, 28 can have any directions, e.g. towards the turbine or they can have a circumferential direction. Other directions are naturally possible. The direction towards the turbine can be useful to create a film of cold air protecting the wall 18. In addition, the first and/or second and/or third cooling holes 20, 23, 28 can be directed in same, different or opposite directions. Figure 7 shows a portion of the wall 8 in a plane; this figure shows the first cooling holes 20 that are directed towards the turbine, the third holes 28 that are directed at an angle with the direction of the first holes 20, the second holes 23 of a row 35 also directed at an angle with the directions of both the first and the third holes and the second holes 23 of a row 34 directed circumferentially. References 55, 56, 57, 58 identify respectively the direction of the first holes 20 (direction 55), the direction of the second holes 23 (directions 56 and 57) and the direction of the third holes 28 (direction 58).

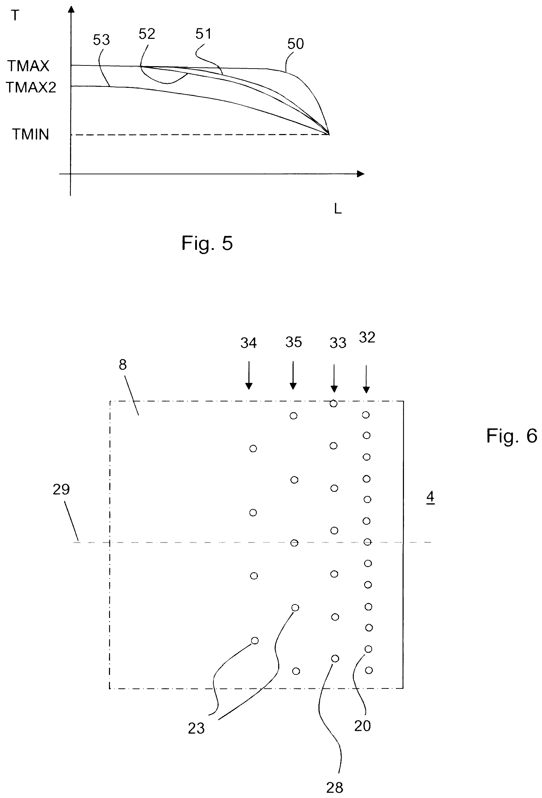

Figure 6 shows a view of the shell 8 in a plane, with the first, second and third holes 20, 23, 28. This figure shows that the wall 18 has one row 32 of first holes 20, two rows 34 and 35 of second holes 23 and one row 33 of third holes 28; each row includes cooling holes distributed circumferentially over the wall 18 of the inner shell 8. Preferably the number of first holes 20 in the row 32 closer to the turbine 4 is larger than the number of third holes 28 in the row 33; in addition the number of second holes 23 in each of the rows 34 and 35 is lower than the number of holes 20 in the row 33 and it is also lower than the number of third holes 28 in the row 33; preferably the number of second holes 23 in the rows 34 and 35 is the same. Naturally, according to the requirements, the number of first, second or third holes in each row can be greater than same as or lower than the number of holes in the other rows.

In addition, preferably, as shown in figure 6, the holes of each row are staggered with respect to the holes of the adjacent row closer to the turbine and preferably also with respect to all other rows closer to the turbine. In this respect the holes 28 of the row 33 are staggered (i.e. they have different circumferential location) with respect to the holes 20 of the row 32, the holes 23 of the row 35 are staggered with respect to the holes 28 of the row 33 and the holes 23 of the row 34 are staggered with respect to the holes 23 of the row 35.

The wall 18 is also preferably provided with a thermal barrier coating (TBC) layer 40 covering its surface exposed to the hot gas flow and it has a heat exchange enhancer feature at its surface opposite the surface exposed to the hot gas flow. The heat exchange enhancer feature comprises a rough coating 41, such as a bond coat used as a bond coat for example to improve adhesion of a TBC layer to a base material.

The operation of the gas turbine is apparent from that described and illustrated and is substantially the following.

Air is compressed at the compressor 2 and is supplied to the combustors 3 together with a fuel. Combustion of the fuel in the presence of compressed air generates hot gas 45 with high pressure and temperature. The hot gas 45 is supplied via the transition piece 5 to the turbine 4, where it is expanded, and mechanical power is collected at the rotor 11.

When the hot gas 45 flows through the transition piece 5 it heats the wall 18; to control the temperature of the wall 18 cooling air 46 is provided at the surface of the wall 18 opposite the one facing the annular chamber 13. This cooling air 46 is then purged via a gap 47 between the transition piece 5 and the turbine 4. Because of this cooling air 46 and also because of the heat transfer to the large metal mass 48 at the connection between the wall 18 to the rotor cover 12, the temperature of the downstream part of the wall 18 facing the turbine 4 is smaller (also much smaller) than the temperature at upstream parts of the wall 18.

The cooling holes 20, 23, 28 allow a softer gradient of temperature from a maximum temperature (TMAX) that occurs at areas of the wall 18 far removed from the turbine 4 to a minimum temperature (TMIN) that occurs at areas of the wall 18 close to the turbine 4.

Since the cooling holes can be provided at positions of the wall 18 most appropriate for the desired temperature gradient, they can be used for providing of a temperature reduction also at areas away from the turbine, e.g. at areas where without cooling holes the temperature would be the maximum temperature or close to it.

In addition, the cooling holes with different angles allow different cooling at different areas of the wall 18, because of the different extension of the cooling holes through the wall 18 (smaller angles 21 result in larger lengths of the cooling holes through the wall 18).

Moreover, the deflection of hot gas away from the wall 18 (effect achieved in particular by small angles 21) counteracts heat transfer from the hot gas to the wall 18 and/or the generation of a protective film of cooling air (effect achieved in particular by cooling holes with large angles 21) also prevents heat transfer from the hot gas 45 to the wall 18.

In addition, also the TBC layer 40 and the rough coating 41 contribute to a reduction of TMAX and thereby to a softer temperature gradient over the length of the wall 18, because the TBC layer counteracts heat transfer from the hot gas 45 to the wall 18 and the rough coating 41 promotes heat removal from the wall 18.

Figure 5 schematically depicts the course of the temperature for a traditional gas turbine without cooling holes and shows the gentler temperature decrease that can be achieved with different schemes of cooling holes. In particular, figure 5 shows a diagram with the temperature T on the axis of ordinate and the length L of the wall 18 on the axis of abscissae. Curve 50 is representative of the temperature course from a maximum temperature (TMAX) to a minimum temperature (TMIN) in a traditional gas turbine while curves 51 and 52 are representative of the course of the temperature from the maximum temperature TMAX to the minimum temperature TMIN with different cooling hole angles 21. These curves 51 and 52 show that opportune location of the holes allows a temperature reduction also before the temperature reduction that occurs in traditional gas turbine and in addition the appropriate choice of angles of the cooling holes allows a desired temperature decrease over the wall 18 (in particular in the direction of the axes 29), such that a desired path, preferably soft, of the temperature reduction can be achieved. Curve 53 shows the effect of the TBC layer 40 and rough coating 41 in reducing the TMAX to TMAX2.

Naturally the features described may be independently provided from one another.

In practice the materials used and the dimensions can be chosen at will according to requirements and to the state of the art.

## Claims

1. A gas turbine (1) comprising a compressor (2), one or more combustors (3) and a turbine (4), wherein a transition piece (5) is provided between the one or more combustors (3) and the turbine (4) for guiding a hot gas (45) generated in the one or more combustors (3) to the turbine (4), the transition piece (5) having an inner shell (8) and an outer shell (9) defining an annular chamber (13), **characterised in that** the inner shell (8) has a wall (18) with cooling holes (20, 23, 28), wherein first cooling holes (20) closer to the turbine (4) have a larger angle (21) than second cooling holes (23) farther from the turbine (4), each angle (21) being defined by a longitudinal axis (25) of the cooling hole directed towards the annular chamber (13) and an axis (27) perpendicular to the wall (18).

2. The gas turbine (1) according to claim 1, **characterized in that** the turbine (4) has a longitudinal axis (29), the transition piece (5) extends over the longitudinal axis (29) of the turbine (4) and the first cooling holes (20) are closer to the turbine (4) than the second cooling holes (23) with respect to the longitudinal axis (29) of the turbine (4).

3. The gas turbine (1) according to claim 1 or 2, **characterized in that** the first cooling holes (20) have one first angle and the second cooling holes (23) have one second angle.

4. The gas turbine according to claim 3, **characterised by** comprising at least third cooling holes (28) between the first and the second cooling holes (20, 23), the third cooling holes (28) having one third angle with a size between the first and the second angle.

5. The gas turbine (1) according to any of claims 2 through 4, **characterised in that** the first angle is 60 degrees and the second angle is 0 degrees.

6. The gas turbine (1) according to any of claims 4 through 5, **characterised in that** the third angle is 45 degrees.

7. The gas turbine according to any of claims 1 through 6, **characterised in that** the first and/or second and/or third angles (20, 23, 28) have a direction towards the turbine and/or a circumferential direction and/or they are at an angle.

8. The gas turbine according to any of claims 1 through 7, **characterised in that** the first and/or second and/or third angles (20, 23, 28) are directed in same or different directions.

9. The gas turbine according to any of claims 1 through 8, **characterised in that** the shell (8) has only one row (32) of first holes (20), only two rows (34, 35) of second holes (23) and preferably only one row (33) of third holes (28).

10. The gas turbine according to claim 9, **characterised in that** the number of first holes (20) in the row (32) is larger than the number of third holes (28) in the row (33); the number of second holes (23) in the row (35) closer to the turbine (4) is lower than the number of third holes (28) in the row (33) and the number of second holes (23) in the row (34) farther from the turbine (4) is the same as the number of second holes (23) in the row (35) closer to the turbine (4).

11. The gas turbine according to any of claims 1 through 10, **characterised in that** the holes of each row are staggered with respect to the holes of the adjacent row closer to the turbine and preferably also with respect to all other rows closer to the turbine.

12. The gas turbine (1) according to any of the previous claims, **characterised in that** the wall (18) has a TBC layer (40) covering its surface exposed to the hot gas flow.

13. The gas turbine (1) according to any of the previous claims, **characterised in that** the wall (18) has a heat exchange enhancer feature at its surface opposite the surface exposed to the hot gas flow.

14. The gas turbine (1) according to claim 13, **characterised in that** the heat exchange enhancer feature comprises a rough coating (41), such as a coat used as a bond coat.

15. The gas turbine (1) according to any of claims 1 through 14, **characterised in that** the compressor (2) and the turbine (4) are connected to the inner shell (8) and to the outer shell (9) at opposite front sides (16) of the transition piece (5), and the one or more combustors are connected to the outer shell (9) at a lateral side (17) of the transition piece (5).
